# EUROPÄISCHE PATENTSCHRIFT

(11) **EP 2 390 185 B1**
(45) Veröffentlichungstag und Bekanntmachung des Hinweises auf die Patenterteilung: **13.06.2018**
(21) Anmeldenummer: 11160980.6
(22) Anmeldetag: 04.04.2011
(51) Int. Cl.: B64F 1/32

(54) **Containertransporter**
Container transporter
Transporteur de conteneur

(30) Priorität: 31.05.2010 DE 102010022081
(43) Veröffentlichungstag der Anmeldung: 30.11.2011
(73) Patentinhaber: MULAG Fahrzeugwerk Heinz Wössner GmbH & Co. KG, 77728 Oppenau (DE)
(72) Erfinder: Verbücheln, Karl-Josef, 77871, Renchen-Ulm (DE)
(74) Vertreter: Weickmann & Weickmann PartmbB

(56) Entgegenhaltungen:
- DE-A1- 3 821 246
- DE-U1- 7 733 457
- US-A- 3 655 075
- Jbt Aerotech: "CPT-7 Transporter", , 1 January 2009 (2009-01-01), XP055354207, Retrieved from the Internet: URL:http://www.jbtaerotech.com/~/media/JBT %20AeroTech/Images/GSE/CL8%20CLT8%20CPT7%2 0Transporters/JBT%20CPT7%20Brochure%200809 .ashx [retrieved on 2017-03-13]

## Beschreibung

### I. Anwendungsgebiet

Die Erfindung betrifft so genannte Containertransporter, wie sie auf dem Vorfeld eines Flughafens benutzt werden.

### II. Technischer Hintergrund

Diese Containertransporter werden benötigt, um das meist in Containern, manchmal auch auf Paletten, angeordnete Ladegut in und aus einem Flugzeug zu bringen.

Beim Entladen eines Flugzeuges wird direkt neben dem Flugzeug für den gesamten Entladevorgang einmalig ein so genannter Highloader positioniert, der eine Lade-Plattform hat, die z. B. mittels eines Scherengestänges auf die Höhe der Ladeluke des Flugzeuges ausgefahren werden kann, sodass ein Container aus dem Flugzeug - oft manuell mittels Anschieben - auf den Highloader verbracht werden kann.

Anschließend senkt sich die Ladeplattform des Highloaders ab bis knapp über den Boden, nämlich auf die Übergabehöhe eines herangefahrenen Containertransporters, dessen Ladefläche in seiner Höhe nur geringfügig veränderbar ist, der jedoch auf dem Vorfeld verfahren wird.

Auch hier erfolgt die Übergabe manuell durch Hinüberschieben vom Highloader auf den Containertransporter.

Anschließend fährt dieser mit dem aufgesattelten Container - meist nur eine kurze Strecke - an einen sogenannten Dolly - einen von mehreren Anhängern hinter einem Vorfeldschlepper - heran, der in der Nähe parkt.

Nun erfolgt wiederum durch manuelles Hinüberschieben die Übergabe des Containers auf den Dolly, bis alle Dollies dieses Transportzuges beladen sind, wofür häufig auch eine bestimmte Reihenfolge der entladenen Container eingehalten werden muss.

Theoretisch könnte auch der Highloader nach Übernahme des Containers und Absenken direkt zum Dolly fahren - und umgekehrt - und die Übergabe bewirken.

Dies ist jedoch nicht gewünscht, da der Highloader pro Ladevorgang einmalig genau am Flugzeug positioniert werden muss und nicht ständig bewegt werden soll, da hierdurch die Gefahr der Beschädigung des Flugzeuges relativ groß wäre.

Auch das Heranfahren der Dollies direkt an den Highloader ist keine Alternative, da die Dollies nicht einzeln, sondern in Form eines langen Transportzuges über Deichseln miteinander verbunden sind und daher einzeln nicht ausreichend positionsgenau an den Highloader herangefahren werden können.

Zusätzlich müsste der Transportzug wegen einer gewünschten endgültigen Reihenfolge der Container auf dem Transportzug dabei noch fast jedes Mal rangieren, was einen zu hohen Zeitaufwand ergeben würde.

Deshalb wird fast ausnahmslos die oben beschriebene Lösung mittels zwischengeschaltetem Containertransporter verwendet, der bei kurzen Entfernungen sogar den Container aufgesattelt bis in die Ladehalle verbringt.

Beim Beladen läuft der Vorgang genau umgekehrt ab.

Nachteilig bei der beschriebenen Vorgehensweise ist, dass die Übergabe an und vom Containertransporter - dessen Ladefläche ebenso wie die des Highloaders und der Dollies Transport-Rollen aufweist, auf denen die Container leicht abrollen, beim Containertransporter und bei Highloader jedoch antreibbar sind - die Container manuell hinüber geschoben werden müssen, was bei einem Gewicht bis ca. 7 t auch für zwei Mann Personal eine anstrengende Tätigkeit ist.

Hinzu kommt, dass die Container - die von der Grundfläche her nicht quadratisch, sondern länglich sind und zusätzlich auf einer Seite einen Überhang, aufweisen - auf den Dollies mit dem Überhang nach hinten ausgerichtet stehen sollen. Im Flugzeug dagegen müssen sie wegen optimaler Ausnutzung des Laderaumes mit diesem Überhang gerade zur Seite weisend eingebracht werden.

Folglich müssen die Container auf ihrem Weg in das Flugzeug einmal um 90° gedreht werden, was derzeit mit Hilfe des Highloaders durchgeführt wird, dort jedoch dessen Ladezeit für jeden Container verlängert.

In diesem Zusammenhang ist aus der DE 3821246 A1 eine Transportanordnung bestehend aus einer Laderampe und einem parallel heranzufahrenden Containertransporter bekannt, bei der aus der Rampe eine Übergabevorrichtung mit einer angetriebenen Rolle ausfahrbar ist, um einen Container vom Containertransporter auf die Rampe herüberzufahren.

Eine Übergabevorrichtung, die in dem Containertransporter angeordnet ist, zeigt diese Schrift nicht.

Ferner zeigt das deutsche Gebrauchsmuster GM 7733 457 einen Container-transporter, in dessen Oberseite unterschiedlich orientierte Walzen höhenverstellbar angeordnet sind, diese jedoch nicht seitlich über den Container-transporter hinaus ausgefahren werden können.

Ferner ist aus dem Prospekt "CPT-7 Transporter" der Firma JBT Aerotech ein Containertransporter bekannt, der in einer Ausführungsform auch "Index Fingers" aufweist, die nicht dargestellt sind und möglicherweise über die Außenkante des Containertransporters vorstehen. Allerdings ist dieser Schrift kein Hinweis zu entnehmen, dass es sich dabei um eine Übernahme-Vorrichtung zum Herüberziehen eines Containers handelt.

### III. Darstellung der Erfindung

### a) Technische Aufgabe

Es ist daher die Aufgabe gemäß der Erfindung, einen Containertransporter und ein Verfahren zu seinem Betrieb zur Verfügung zu stellen, welcher die angegebenen Nachteile nicht aufweist.

### b) Lösung der Aufgabe

Diese Aufgabe wird durch die Merkmale der Ansprüche 1 und 12 gelöst.

Vorteilhafte Ausführungsformen ergeben sich aus den Unteransprüchen.

Durch eine Übernahmevorrichtung, die auch einen Übernahmeantrieb besitzt, im Containertransporter kann ein außerhalb der Ladefläche des Containertransporters stehendes Ladegut auf den Containertransporter mit Hilfe dieses Übernahmeantriebes herüber bewegt, also geschoben oder gezogen, werden.

Je nach spezifischer Ausgestaltung dieser Übernahmevorrichtung müssen dafür jeweils unterschiedliche Randbedingungen erfüllt sein, beispielsweise generell sich das zu übernehmende Ladegut etwa auf gleicher Höhe wie die Ladefläche des Containertransporters befinden, oder das Transportfahrzeug, von dem das Ladegut übernommen werden soll, muss nah genug am Containertransporter positioniert und spezifisch gestaltet sein, beispielsweise Durchbrüche, Kopplungselemente oder ähnliches an den richtigen Stellen aufweisen, worauf im folgenden noch näher eingegangen wird.

Vorzugsweise kann die Übernahmevorrichtung dabei in eine aktivierte Stellung aus dem Containertransporter seitlich herausgefahren werden - eben aus derjenigen Seite, von der her die Übernahme des Transportgutes erfolgen soll, was bei einem Containertransporter mit nur einer Seitenwand die restlichen drei Seiten sein können - während die Übernahmevorrichtung in ihrer deaktivierten Stellung vorzugsweise innerhalb der Grundfläche des restlichen Containertransporters liegt. Dementsprechend kann die Übernahmevorrichtung maximal drei Mal, also einmal für jede freie Seite, im Containertransporter vorhanden sein.

Eine solche Übernahmevorrichtung kann das zu übernehmende Ladegut im aktivierten Zustand entweder mittels einer angetriebenen, am Ladegut anliegenden Übernahmerolle mittels Reibschluss oder mittels eines beweglichen anliegenden Reibklotzes bewegen oder formschlüssig mittels eines hinter das Ladegut greifenden Übernahmehakens, der dann in Richtung Container-transporter bewegt wird. Übernahmerolle, Übernahmehaken oder Übernahmereibklotz können sich dabei am freien Ende eines Übernahmearmes befinden oder insbesondere die Übernahmehaken auch an einem Riemen oder einer Kette befestigt sein.

Prinzipiell kann eine solche Übernahmevorrichtung im aktivierten Zustand oberhalb oder unterhalb der Ladefläche positioniert sein. Bei einer Positionierung oberhalb der Ladefläche wird die Übernahmevorrichtung hinter die vom Containertransporter abgewandte Rückseite greifen mittels eines Übernahmehakens oder an den Seitenflächen angreifen mittels kraftschlüssiger Elemente wie einer Übernahmerolle oder einem Übernahmereibklotz.

Der entsprechende Übernahmearm kann im deaktivierten Zustand in der Ladefläche des Containertransporters versenkt sein oder hochgeklappt an der Seitenwand aufrecht stehend gelagert werden, und wird zum aktivieren entweder an den Seitenflächen des Ladegutes vorbei ausgefahren oder über das Ladegut herabgeklappt.

Sofern die Übernahmevorrichtung unterhalb der Ladefläche angeordnet ist, kann sie bei reibschlüssiger Wirkung vorzugsweise an der Unterseite des Ladegutes angreifen. Dann sind hierfür entsprechend positionierte Durchbrüche in der Ladefläche des Transportfahrzeuges, von dem das Ladegut übernommen werden soll, notwendig.

Falls das Transportfahrzeug einen umlaufenden geschlossenen Rahmen um seine Ladefläche aufweist, und sich solche Durchbrüche nur innerhalb der Ladefläche befinden, muss die Übernahmevorrichtung, beispielsweise der Übernahmearm, der an seinem vorderen Ende die eine oder mehreren angetriebenen Übernahmerollen trägt, vom deaktivierten in den aktivierten Zustand einen solchen Bewegungsweg durchlaufen, dass die Übernahmerollen zunächst unter dem Rahmen des Transportfahrzeuges hindurch greifen und danach sich nach oben bewegen und in den entsprechenden Durchbrüchen den Boden des Ladegutes kontaktieren.

Falls im Rahmen des Transportfahrzeuges entsprechende Lücken vorhanden sind, kann der Übernahmearm auch im wesentlichen horizontal oder schräg von unten nach oben vom Containertransporter aus Richtung Unterseite des Ladegutes, welches auf dem Transportfahrzeug steht, bewegt werden.

Sofern die Übernahmevorrichtung kraftschlüssig mittels Übernahmehaken an der Unterseite des Ladegutes angreift, kann ein entsprechender Übernahmearm unter dem Boden des Ladegutes z. B. durch entsprechende Ausnehmungen oder Nuten in der Ladefläche des Transportfahrzeuges bis zur Rückseite des Ladegutes ausgefahren werden.

Sofern man bereit ist, diese Transportfahrzeuge stärker an die automatische Übernahme auf den Containertransporter auszugestalten, kann in dem Transportfahrzeug selbst auch eine - allerdings nicht angetriebene - Übergabevorrichtung angeordnet sein, die in der Lage ist, durch andocken an der Übernahmevorrichtung des Containertransporters mit dieser zusammenzuwirken und von dieser angetrieben zu werden.

Dann befindet sich z. B. der Haken zum Ziehen oder Schieben des Ladegutes oder reibschlüssig am Ladegut angreifende Elemente, beispielsweise Riemen oder Ketten, die aus der Oberseite der Ladefläche des Transportfahrzeuges vorstehen und auf denen das Ladegut ruht, montiert als Bestandteil des Transportfahrzeuges. Die Übernahmevorrichtung des Containertransporters mit ihrem Antrieb trägt dann nicht direkt das formschlüssig oder kraftschlüssig am Ladegut angreifende Element, sondern treibt lediglich den beweglichen Teil der Übergabevorrichtung des Transportfahrzeuges an, dessen Kontaktelement das Ladegut in Bewegung versetzt.

Eine typische Lösung hierfür sind zwei oder mehr nebeneinander angeordnete, jeweils in einer vertikalen Ebene, die in der gewünschten Bewegungsrichtung des Ladegutes liegt, angeordnete Riemen oder Ketten, an deren unter der Ladefläche liegenden unteren Trum die Übernahmevorrichtung des herangefahrenen Containertransporters angreift und dieses um etwa eine halbe Umdrehung bewegen kann. Durch Bewegen in die richtige Richtung kann beispielsweise ein Haken, der an diesem Riemen oder dieser Kette befestigt ist, die hintere Unterkante des Ladegutes erfassen und diesen vorwärts schieben auf den Containertransporter. Statt der Haken ist dies auch mittels Reibschluss möglich, wenn das obere Trum der Kette oder des Riemens aus der Ladefläche des Transportfahrzeuges nach oben vorsteht und das Ladegut darauf aufliegt.

In allen Fällen genügt es, wenn von der Übernahmevorrichtung das Ladegut nicht vollständig, sondern nur bis zum Kontakt mit den ersten angetriebenen Transportrollen auf der Ladefläche des Containertransporters auf diesen aufgeschoben wird, denn ab diesem Zustand ergreifen diese angetriebenen Transportrollen das Ladegut und ziehen es vollständig auf den Container-transporter herüber.

Eine weitere Möglichkeit der Übergabevorrichtung im Transportfahrzeug sind zwei nebeneinander als Ladefläche ausgebildete drehbare Scheiben, auf denen das Ladegut jeweils mit einem Teil seiner Grundfläche steht. Durch gleichzeitiges, gegenläufiges Verschwenken dieser beiden Drehscheiben, angetrieben von der Übernahmevorrichtung des Containertransporters aus, wird das darauf ruhende Transportgut in Richtung Container-transporter verlagert. Vorzugsweise sind in der Oberseite der Drehscheibe hierfür Rollen oder drehbare Kugeln als tragende Elemente eingelassen.

Wenn sich das Ladegut auf dem Containertransporter befindet und es sich dabei um einen Container handelt - der von der Grundfläche her deutlich kleiner ist als eine Palette - ist es gewünscht, diesen Container automatisch auf der Ladefläche des Containertransporters auch zu drehen, obwohl der Containertransporter angetriebene Transportrollen aufweist, die meist alle parallel zueinander liegen und meist so angeordnet sind, dass sie darauf liegendes Transportgut nur in Längsrichtung des Containertransporters, also parallel zur Seitenwand, transportieren können.

Erfindungsgemäß wird dies gelöst, indem in der Ladefläche des Containertransporters ein anhebbarer und um seine Hochachse drehbarer erster Hubrahmen angeordnet ist, der in seiner deaktivierten Stellung unter die Ladefläche, also das Auflageniveau der Transportrollen des Containertransporters, absenkbar ist.

In diesem abgesenkten deaktivierten Zustand kann der gewünschte Container über dem Hubrahmen positioniert, anschließend der Hubrahmen zusammen mit dem Container in die aktivierte Stellung hochgehoben, um den gewünschten Winkel gedreht werden, was meist 90° ist, und wieder abgesenkt werden, woraufhin der Container in der um z. B. 90° gedrehten Stellung wiederum auf den Transportrollen des Containertransporters ruht.

Der Hubrahmen ist dabei vorzugsweise mit solchen Durchbrüchen gestaltet und so positioniert, dass im abgesenkten Zustand diese Transportrollen durch die Durchbrüche des Hubrahmens hindurch nach oben aufragen.

Damit der Container vor dessen Anheben in Längs- und Querrichtung mittig über dem Hubrahmen positioniert ist, sind in der Ladefläche des Containertransporters aktivierbare, also ausfahrbare, Anschläge angeordnet, und zwar sowohl für die Längsrichtung als auch für die Querrichtung.

Dabei werden die zu drehenden Container vom Containertransporter in der Regel nur von dessen Stirnseiten, also in Längsrichtung, übernommen, weshalb die den Container erfassenden Transportrollen des Containertransporters ihn in Längsrichtung bis zu den ausgefahrenen Längsanschlägen transportieren, wodurch die Längspositionierung bereits korrekt ist.

In Querrichtung schiebt dann eine Querpositioniervorrichtung den Container gegen entsprechende Queranschläge.

Dabei kann es sich um einen aus der Seitenwand des Containers ausfahrbaren Schieber handeln oder um einen neben dem ersten Hubrahmen angeordneten zweiten Hubrahmen, der zwar nicht drehbar ist, aber in Querrichtung wirksame, angetriebene Transportrollen trägt. Sofern der Container wenigstens teilweise auf diesem zweiten Hubrahmen steht, kann dieser hochgefahren und dessen Transportrollen in Drehung versetzt werden, wodurch der teilweise darauf ruhende Container in Querrichtung gegen die Queranschläge verfahren wird. Dadurch ist die richtige Positionierung gegenüber dem ersten drehbaren Hubraum erreicht, der nach Absenken des zweiten Hubrahmens daraufhin in Aktion tritt wie zuvor beschrieben.

Sofern das Transportfahrzeug, von dem das Ladegut übernommen werden soll, spezifische Ausgestaltungen - sei es nur Durchbrüche und Freiräume oder auch eine bewegliche Übergabevorrichtung - aufweist, sind zum korrekten Zusammenwirken von Containertransporter und Transportfahrzeug an den entsprechenden Seitenflächen des Containertransporters vorzugsweise formschlüssig wirkende Kontaktelemente vorzusehen, die insbesondere selbst zentrierend mit entsprechenden Gegenelementen am Transportfahrzeug zusammen wirken und insbesondere auch der Steuerung des Containerfahrzeuges ein Signal für eine korrekte Positionierung des Containertransporters gegenüber dem Transportfahrzeug liefern.

Aus den vorstehenden Darlegungen wird klar, dass - ganz unabhängig von der jeweiligen körperlichen Ausgestaltung - zum automatischen Verbringen des Ladegutes von einem benachbarten Transportfahrzeug auf den Containertransporter prinzipiell eine Übernahmevorrichtung des Containertransporters seitlich aus diesem ausgefahren und entweder das Ladegut direkt oder eine im Transportfahrzeug angeordnete, bewegliche Übergabevorrichtung dadurch in Bewegung versetzt wird, sei es kraftschlüssig oder formschlüssig, und hierdurch das Ladegut zumindest teilweise und bis zum Kontakt mit den angetriebenen Transportrollen des Containertransporters auf diesen verschoben wird.

Zum Drehen des Containers auf dem Containertransporter wird der Container mittig oberhalb eines Hubrahmens, der sich absenkbar und anhebbar in der Ladefläche des Containertransporters befindet, positioniert und der Hubrahmen aus der Ladefläche mit dem Container nach oben ausgefahren, gedreht und anschließend wieder abgesenkt, so dass danach der Container in der gewünschten Drehlage wieder auf den Transportrollen des Containertransporters aufliegt, die ja nur in einer fest installierten Richtung drehbar im Ladeboden des Containertransporters angeordnet sind und keine Drehung des Ladegutes bewirken können.

### c) Ausführungsbeispiele

Ausführungsformen gemäß der Erfindung sind im Folgenden beispielhaft näher beschrieben. Es zeigen:
- Fig. 1:: das Herüberziehen des Ladegutes mit einem formschlüssigen Kontaktelement oberhalb der Ladefläche,
- Fig. 2:: das Gleiche unterhalb der Ladefläche,
- Fig. 3:: das Herüberziehen des Ladegutes mit einem kraftschlüssig wirkenden Kontaktelement von der Unterseite des Ladegutes her in einer ersten Version,
- Fig. 4:: in einer zweiten Version, und
- Fig. 5:: in einer dritten Version,
- Fig. 6:: ein Transportfahrzeug mit einer beweglichen Übergabevorrichtung,
- Fig. 7:: ein Transportfahrzeug mit einer anderen Version einer beweglichen Übergabevorrichtung,
- Fig. 8:: eine Drehvorrichtung, und
- Figuren 9:: Positioniervorrichtungen für die Drehvorrichtung.

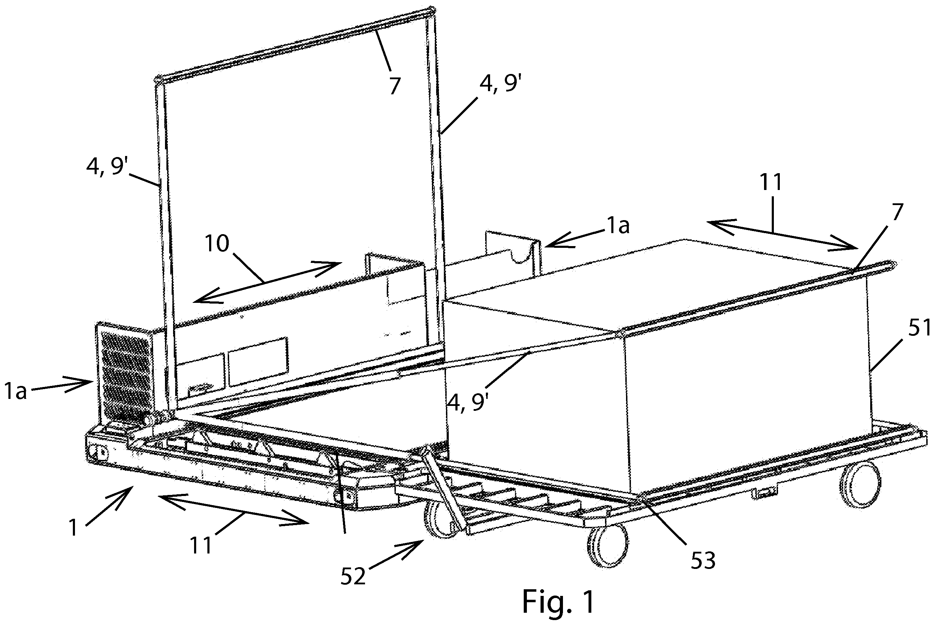

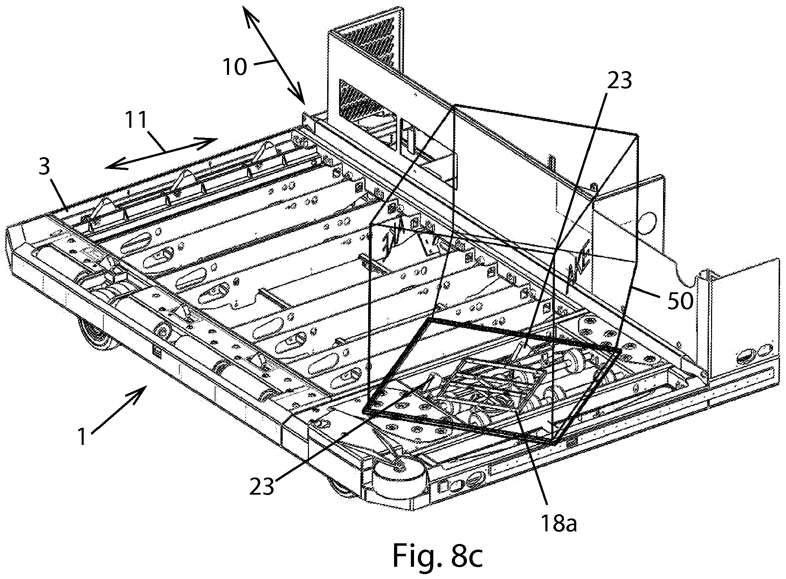

Figur 1 zeigt das grundlegende Problem:
Auf einem Transportfahrzeug 52, einem so genannten Dolly, steht ein Ladegut, in diesem Fall eine sogenannte Palette 51 - im Gegensatz zu beispielsweise einem Container 50, wie er etwa in Figur 8c dargestellt ist - in Form eines rechteckigen Quaders, die in Querrichtung 11 auf die Ladefläche 3 des Containertransporters 1 hinüberbewegt werden soll.

Die Längsrichtung 10 des Containertransporters 1 wird durch die der Ladefläche 3 des Containertransporters aufragende Seitenwand 1a definiert, die hier nur ansatzweise skizziert ist und in der sich normalerweise die hydraulischen, elektrischen und elektronischen Komponenten sowie der Antriebsmotor befinden.

Dieses Hinüberbewegen der Palette 51 wird bisher manuell durchgeführt, da in der Ladefläche 53 des Transportfahrzeuges 52 zwar unter Umständen Rollen vorhanden sind, auf denen das Ladegut 51 gut abrollen kann, jedoch diese Rollen über keinen Antrieb verfügen. Zum Hinüberschieben müssen sich Transportfahrzeug 52 und Containertransporter 1 hinsichtlich ihrer Ladeflächen 3, 53 etwa auf gleicher Höhe befinden, ggf. die Ladefläche 3 des Containertransporters 1 geringfügig tiefer liegen, aber dies kann unter Umständen durch eine begrenzte Höhenveränderbarkeit der Ladefläche 3 des Containertransporters 1 erreicht werden.

Figur 1 zeigt nun eine erste Möglichkeit, wie ein Ladegut - im folgenden wird immer die konkrete Form des Ladegutes, also Palette oder Container, genannt ohne die Erfindung dadurch auf irgendeine Form von Ladegut zu beschränken - hinüber bewegt werden kann.

Zu diesem Zweck besitzt der Containertransporter 1 eine Übernahmevorrichtung 4, die zwei vor und hinter der Palette 51 in Querrichtung 11 verlaufende Übernahme-Arme 9' umfasst, und die um eine horizontale Längsachse nahe an der Seitenwand 1a verschwenkt werden können.

Die Übernahme-Arme 9' können in der Ruhelage entweder aufrecht stehend nahe an der Seitenwand 1a positioniert werden oder flach liegend versenkt unterhalb der Ladefläche 3 im Chassis des Containertransporters 1, sofern sie dabei in der nicht teleskopierten Stellung nicht seitlich über die Grundfläche des Containertransporters 1 vorstehen.

Dabei sind die freien Enden der Übernahme-Arme 9' über eine verbindende Stange verbunden, die als Übernahme-Haken 7 hinter die Palette 51 greift, was jedoch nicht notwendig ist, da auch einzelne von jedem Übernahme-Arm 9' quer abstrebende Übernahme-Haken denselben Zweck erfüllen.

Der Übernahme-Haken 7 kann nun die Palette 51 hintergreifen, indem die aufrecht stehenden Übernahme-Arme 9' von der aufrechten Stellung soweit herabgeklappt werden und dabei in der Längserstreckung ausgefahren werden, dass sich ihre Übernahme-Haken 7, in diesem Fall die verbindende Querstange, hinter der vom Containertransporter 1 abgewandten Rückseite der Palette 51 befindet. Durch Einfahren der teleskopierbaren Übernahme-Arme 9' wird dann die Palette 51 zumindest teilweise auf den Container-transporter 1 gezogen, bis die dort vorhandenen fest installierten Transportelemente, die in Querrichtung wirken - meist in der Höhe verstellbare Transportriemen - Kontakt mit der Unterseite der Palette 51 erhalten und diesen weiterziehen.

Falls die deaktivierte Lage der Übernahme-Arme 9' versenkt im Boden unter der Ladefläche 3 liegt, können diese von dort aus durch teleskopieren seitlich der Palette 51 ausgefahren werden - ggf. nach leichtem Hochschwenken - wobei dann an ihren Enden keine durchgehende Querstange zwischen den beiden Übernahme-Armen 9' vorhanden sein darf sondern einzelne, um die Längsachse der Übernahme-Stange 9' auch drehbare Übernahme-Haken, die erst hinter der Palette 51 herabgeklappt werden und diese dann hintergreifen.

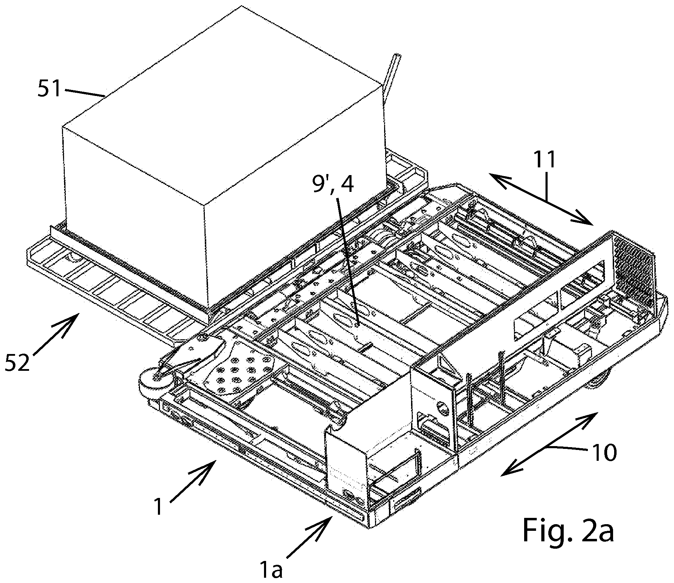

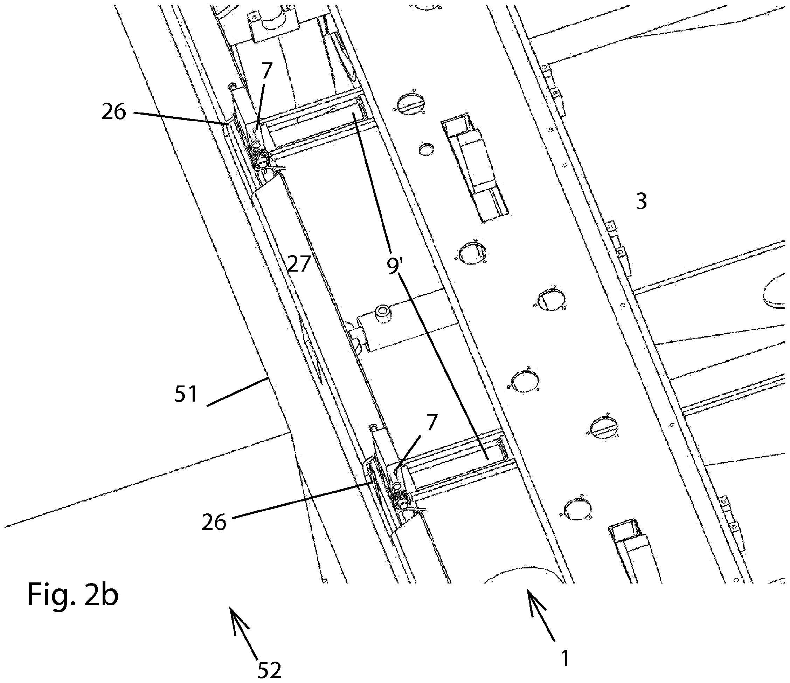

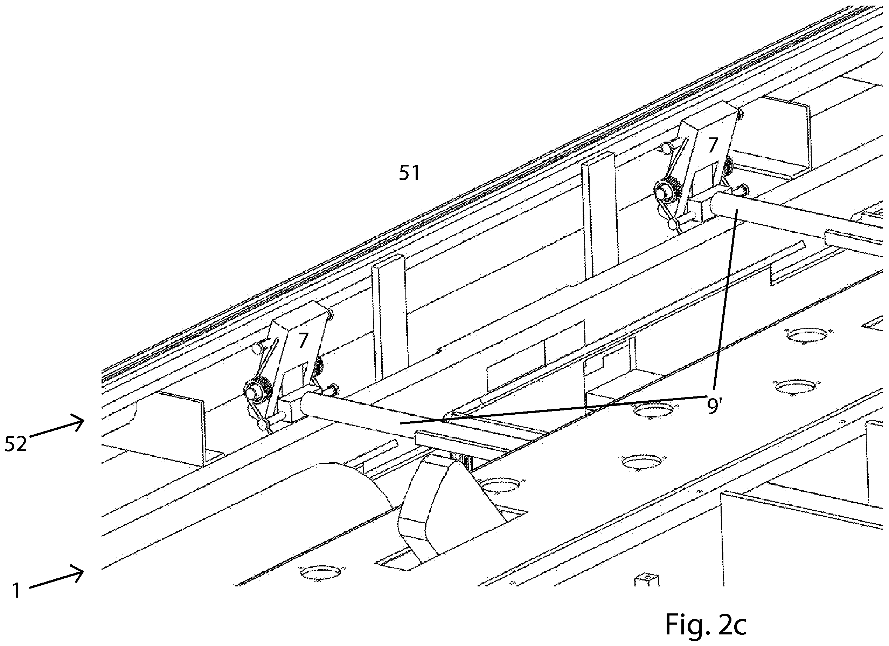

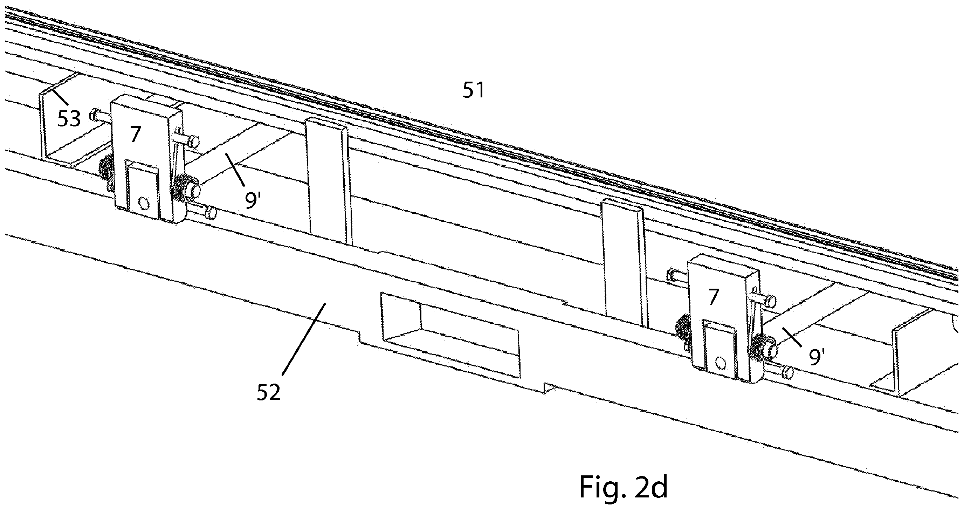

Im Gegensatz zu der oberhalb der Ladefläche 3 angeordneten und wirkenden Übernahmevorrichtung 4 zeigen die Figuren 2 eine Lösung mit einer unterhalb der Ladefläche angeordneten, formschlüssig wirkenden Übernahmevorrichtung 4:
Dabei liegen zwei Übernahme-Arme 9', die ebenfalls teleskopierbar sind, wiederum unterhalb der Ladefläche 3 in Querrichtung 11 verlaufend in dem Containertransporter 1, sind jedoch nicht hochschwenkbar sondern -wie am besten Figur 2b zeigt - durch entsprechend angeordnete Öffnungen im umlaufenden Chassis-Rahmen 27 horizontal ausfahrbar, so dass sie mit ihren freien Enden durch entsprechende Freiräume im Transportfahrzeug 52 unter dem Boden der Palette 51 vorwärts fahren. An ihrem freien Ende sind um eine horizontale Achse schwenkbare Übernahme-Haken 7 angeordnet, die in die nach oben stehende aktivierte Richtung mittels z. B. Federkraft vorgespannt sind, beim Anlaufen an die Palette 51 sich jedoch automatisch einklappen, wie in Figur 2c ersichtlich, und erst hinter der Palette 51 wieder hochklappen, wie in Figur 2d ersichtlich.

Von dieser Stellung aus können nun die teleskopierbaren Übernahme-Arme 9' wieder eingefahren werden und ziehen dadurch durch Anlage der Übernahme-Haken 7 an der Unterkante der Rückseite der Palette 51 die Palette wiederum auf den Containertransporter 1.

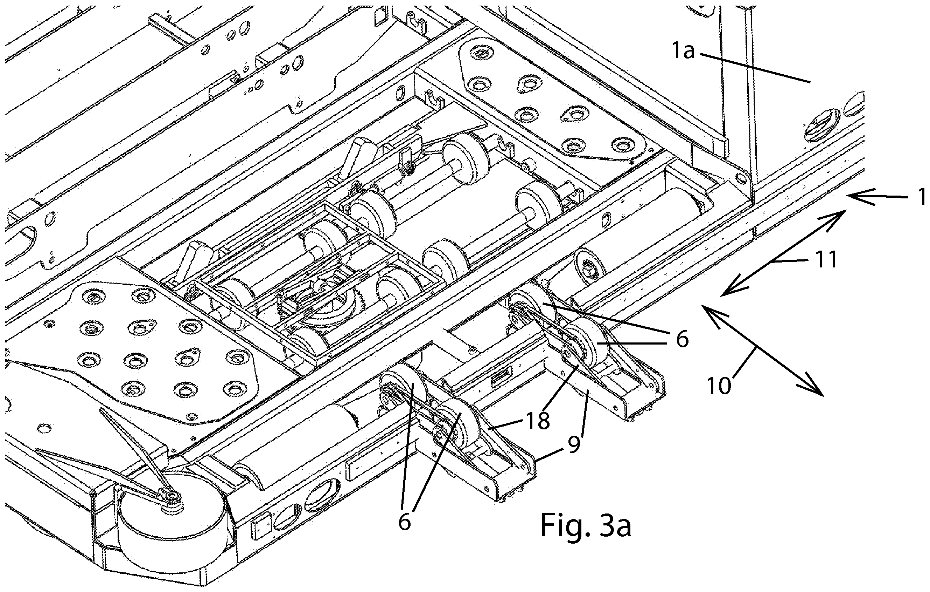

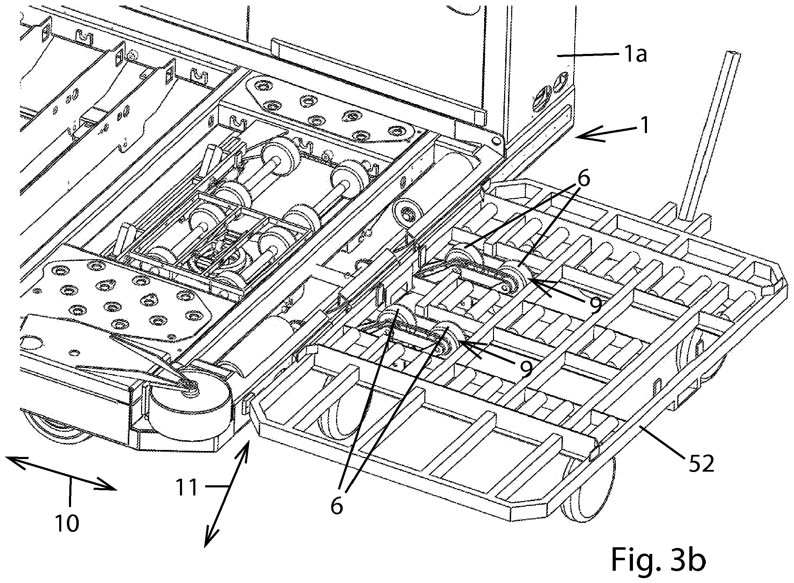

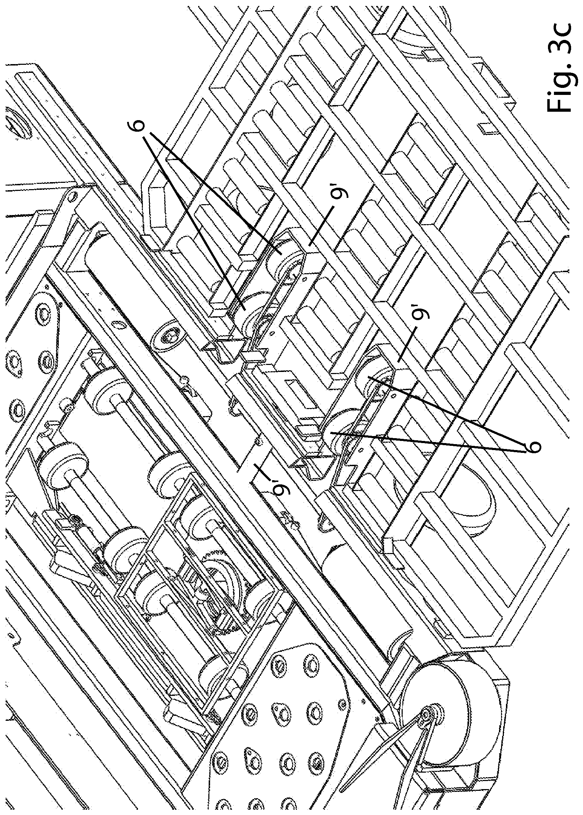

Die Figuren 3, 4 und 5 zeigen demgegenüber kraftschlüssige, also mittels Reibschluss wirkende, Lösungen. Zusätzlich gelöst am Beispiel eines stirnseitigen, also in Längsrichtung 10 erfolgenden, Bewegens eines Transportgutes auf den Containertransporter 1.

Dementsprechend wird das Transportfahrzeug 52, auf dem sich das zu übernehmende - nicht dargestellte - Ladegut befindet, an der Stirnseite des Containertransporters 1 positioniert.

Bei den Figuren 3a und b besteht die Übernahmevorrichtung 4 aus zwei zueinander beabstandeten, in Längsrichtung 10 aus der Stirnseite vorstehenden Übernahme-Armen 9, in denen jeweils zwei antreibbare, verschwenkbare Übernahme-Rollen 6 angeordnet sind. Diese können gegenüber dem Übernahme-Arm 9 mittels eines Hebelgestänges 28, beispielsweise eines Parallelogramms, von der Ruhelage, in der sie sich unterhalb des Niveaus der Ladefläche 3 befinden, nach oben und außen geschwenkt werden, so dass sie den Boden eines auf dem Transportfahrzeug 52 ruhenden Ladegutes durch dort vorhandene Durchbrüche kontaktieren und durch Antrieb dieser Übernahme-Rollen 6 auf den Containertransporter 1 schieben.

Durch diese bogenförmige Schwenkbewegung ist es bei der Lösung der Figuren 3a und 3b nicht notwendig, dass der umlaufende Rahmen des Transportfahrzeuges 52 eine Unterbrechung aufweist, sondern die Übernahme-Rollen 6 tauchen aufgrund ihrer Schwenkbewegung unter diesem Rahmen durch.

Das Hebelgestänge 28 besteht dabei aus einzelnen Hebeln, die an dem Übernahme-Arm 9 mit ihrem unteren Ende befestigt sind und von dort meist schräg nach oben ragen und mit ihrem oberen Ende mit einer der beiden in der gewünschten Transportrichtung hintereinander angeordneten Übernahmerollen 6 verbunden sind, die wiederum durch eine Querstrebe gekoppelt sind, was insgesamt ein Parallelogramm ergibt.

In der in Figur 3a dargestellten deaktivierten Lage weisen die beiden Arme des Hebelgestänges 28 von ihrem Befestigungspunkt am Übernahme-Arm 9 flach ansteigend nach innen in Richtung Containertransporter 1. Vorzugsweise befindet sich dabei die innerste der beiden Übernahme-Rollen 6 noch innerhalb des umlaufenden Rahmens des Containertransporters 1.

Durch das Hochstellen der Arme des Hebelgestänges 28 bis in die Vertikale und darüber hinaus bezüglich des Containertransporters 1 nach außen weisend liegen sie dann in der in Figur 3b dargestellten aktivierten Stellung unter dem Boden des Ladegutes an, den sie natürlich bei aufrechter Stellung des Hebelgestänges 28 etwas anheben und der danach wieder etwas absinken kann, aber mit seinem Eigengewicht auf die in der Endlage durch Anschläge begrenzten auf Übernahme-Rollen 6 aufliegt und von diesen bewegt werden kann.

In Abwandlung dazu zeigt Figur 3c eine Lösung, bei der der Rahmen des Transportfahrzeuges 52 hierfür Ausnehmungen aufweist, so dass der Übernahme-Arm 9' hier teleskopierbar ausgeführt sein kann und horizontal oder leicht nach oben ansteigend in das Transportfahrzeug 52 hinein verfahren werden kann bis zum Kontakt mit dem Boden des nicht dargestellten Ladegutes.

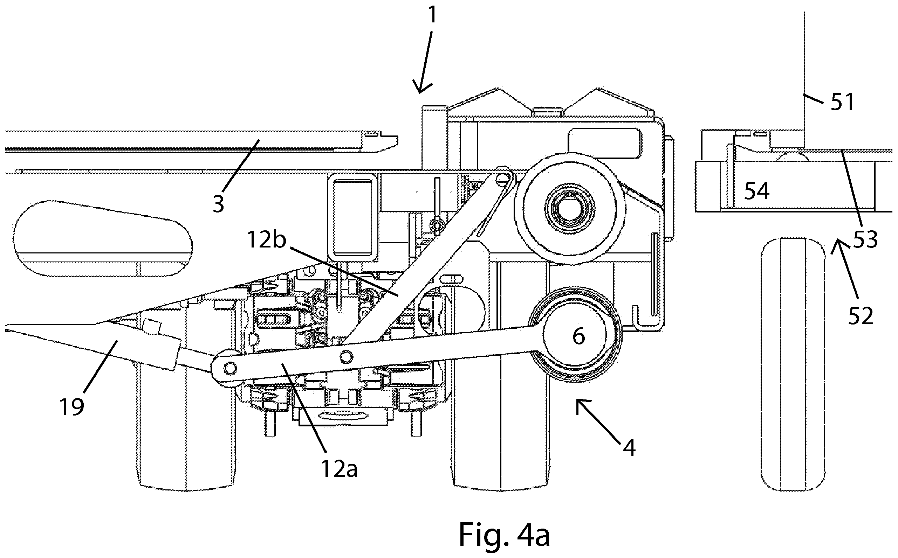

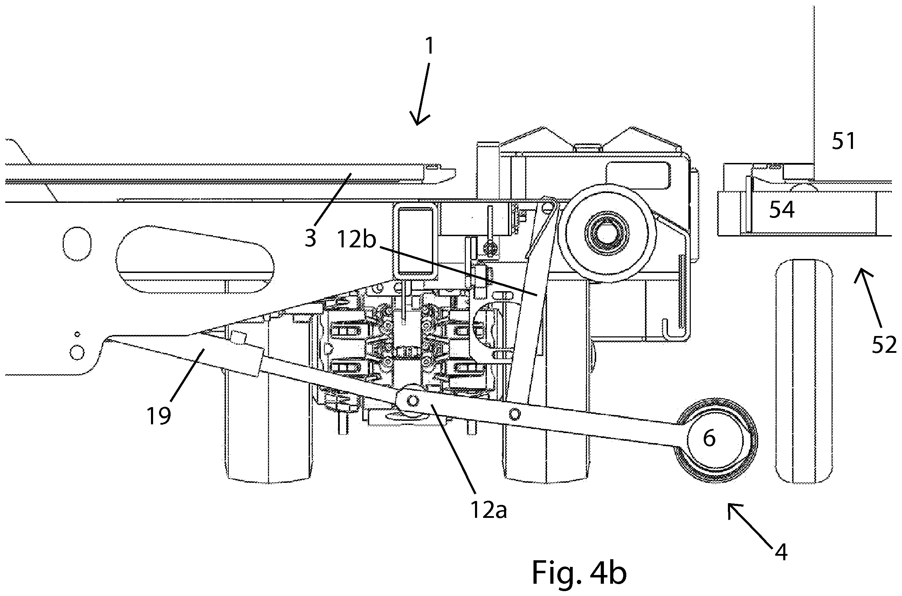

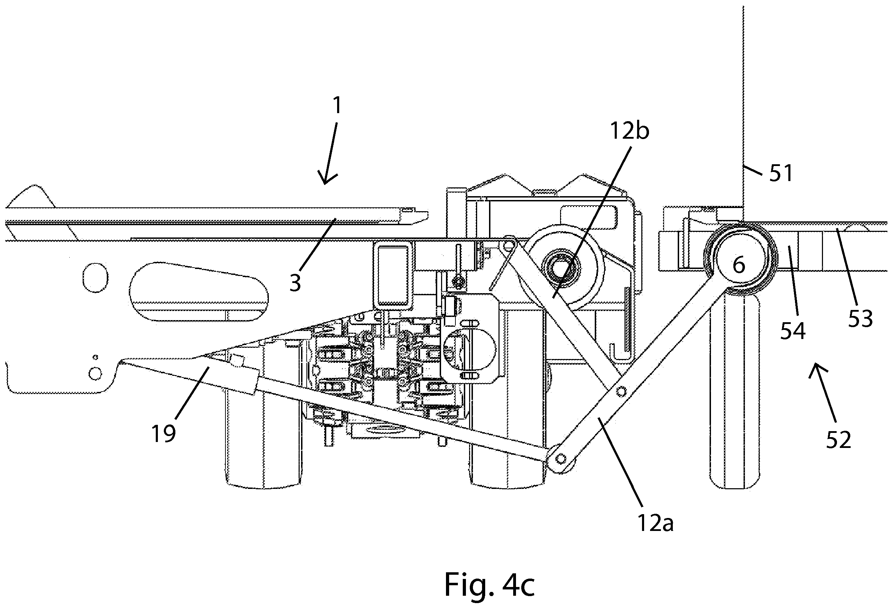

Während bei der Lösung der Figuren 3 die Übernahme-Rollen 6 relativ klein vom Durchmesser her sind, so dass sie in ihrer deaktivierten Lage teilweise noch innerhalb des beispielsweise aus einem U-Profil bestehenden Übernahme-Armes 9 liegen können, ist bei der Lösung der Figur 4 der Durchmesser dieser Übernahme-Rollen 6 sehr viel größer und erreicht mehr als 10 % des Durchmessers der Räder des Containertransporters:
Auch hier ist die Übernahme-Rolle 6, von der hier nur eine von zwei beabstandeten Rollen dargestellt ist, mittels eines Hebelgestänges 12 verschwenkbar zwischen einer deaktivierten Lage in Figur 4a unter dem Chassis des Containertransporters 1 und innerhalb dessen Grundfläche und einer aktivierten Lage gemäß Figur 4c anliegend an der Unterseite des Ladegutes, beispielsweise einer Palette 51, durch entsprechende Durchbrüche 54 im Ladeboden 53 des Transportfahrzeuges 52.

Zu diesem Zweck ist die antreibbare Übernahme-Rolle 6 am freien Ende eines Hebels 12a befestigt, der unter der Ladefläche 3 verläuft und an dem in der Mitte ein zweiter Hebel 12b gelenkig angreift, dessen anderes Ende an der Unterseite des Chassis vom äußeren Rand zurückversetzt schwenkbar am Containertransporter 1 befestigt ist.

Das andere freie Ende des Hebels 12a des Hebelgestänges 12 ist mit einem Arbeitszylinder, etwa einem Hydraulikzylinder 19, verbunden, der in der gewünschten Bewegungsrichtung für das Transportgut unter dem Chassis des Containertransporters 1 verläuft und bei seinem Ausfahren den Hebel 12a in Richtung außerhalb der Grundfläche des Containertransporters 1 bewegt. Wegen des zunächst schräg nach innen unten und zum Schluss nach schräg außen unten weisenden zweiten Hebels 12b durchläuft die Übernahme-Rolle 6 dabei einen wannenförmigen Weg von unter dem Container-transporter 1 bis unter das Transportfahrzeug 52.

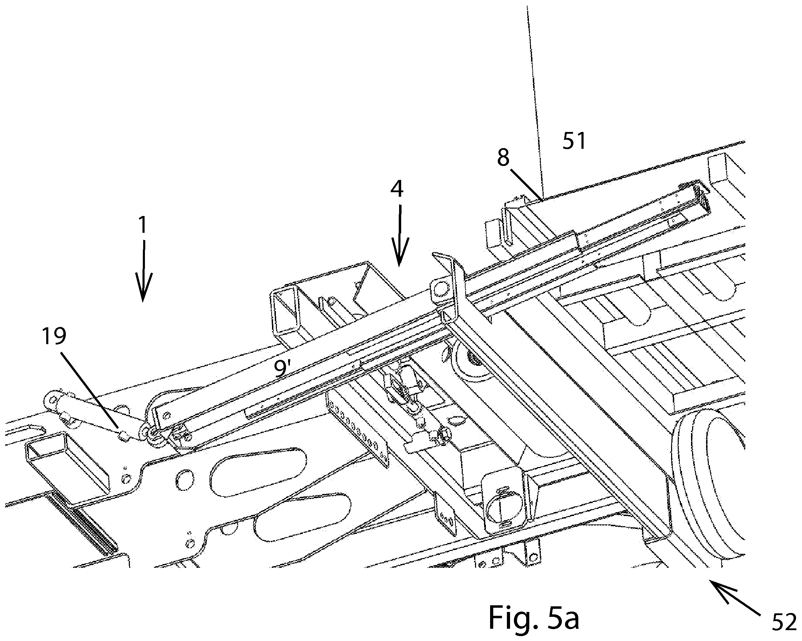

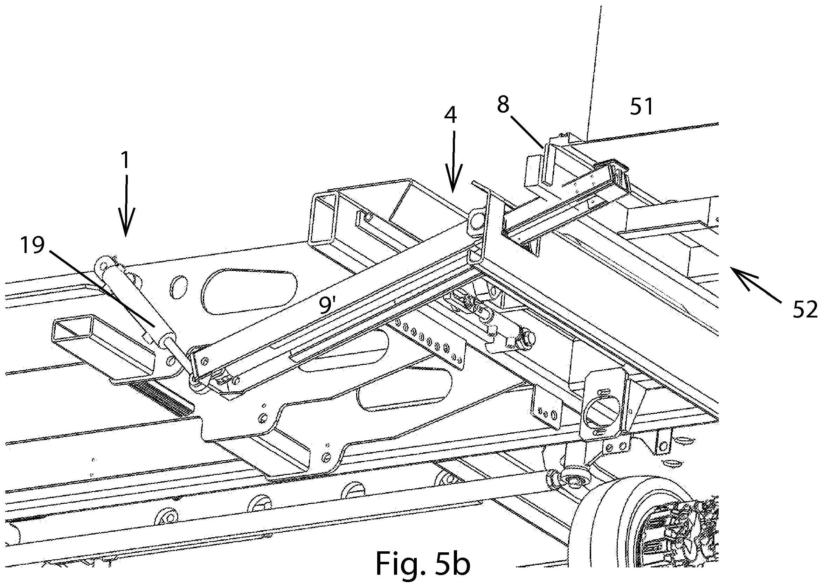

Figur 5 zeigt demgegenüber eine Lösung, bei dem der Boden des Ladegutes wiederum durch Durchbrüche 54 in der Ladefläche 53 des Transportfahrzeuges 52 ergriffen, jedoch mittels Reibschluss gezogen wird, indem an einem teleskopierbaren Übernahme-Arm 9' ein Übernahme-Reibklotz 8 angeordnet ist, und der Übernahme-Arm 9' zusätzlich leicht um eine Querachse verschwenkt werden kann:
Der Übernahme-Arm 9' verläuft dabei unter der Ladefläche 3 des Containertransporters 1 und erstreckt sich durch dessen umlaufenden seitlichen Rahmen schräg nach oben ansteigend hinaus, zumindest in seiner ausgefahrenen Stellung, wie in Figur 5a dargestellt. An seinem freien Ende befindet sich ein nach oben gegen den Boden des Ladegutes, etwa einer Palette 51, gerichteter Übernahme-Reibklotz 8.

Damit dieser Reibklotz 8 im ausgefahrenen Zustand die Unterseite der Palette 51 auch anheben und ziehen kann, ist der Übernahme-Arm 9' in seinem mittleren Bereich gelenkig am Chassis des Containertransporters 1 gelagert, und an seinem hinteren Ende von einem Hydraulikzylinder 19 etwas nach unten gerichtet beaufschlagt. Durch Ausfahren des Hydraulikzylinders wird dadurch das vordere Ende des Übernahme-Armes 9' und damit die Palette 51 angehoben, wobei der Reibklotz 8 natürlich wiederum durch entsprechende - in den Figuren 5 nicht dargestellte - Durchbrüche 54 der Ladefläche 53 des Transportfahrzeuges 52 hindurch greift.

Zum Herüberziehen des Ladegutes, z. B. der Palette 51, bleibt der Hydraulikzylinder 19 in seiner ausgefahrenen Stellung, und der Übernahme-Arm 9' wird in Teleskoprichtung eingefahren. Falls ein solcher Arbeitsschritt nicht ausreicht, kann er mehrfach wiederholt werden zum Übernehmen der Palette 51.

Vorzugsweise steht der Teleskoparm 9' in seiner deaktivierten Lage nicht über die Grundfläche des Containertransporters 1 nach außen vor.

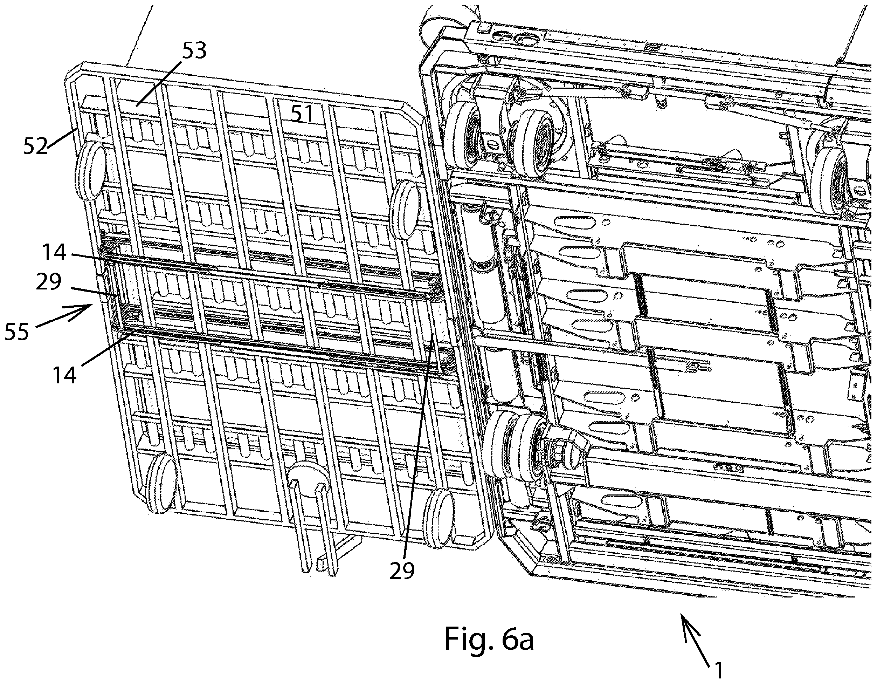

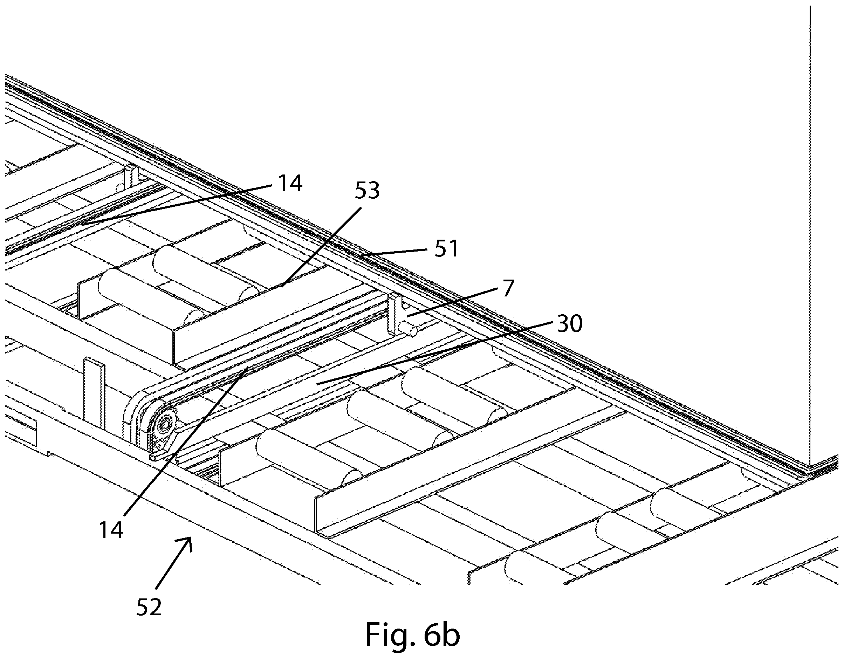

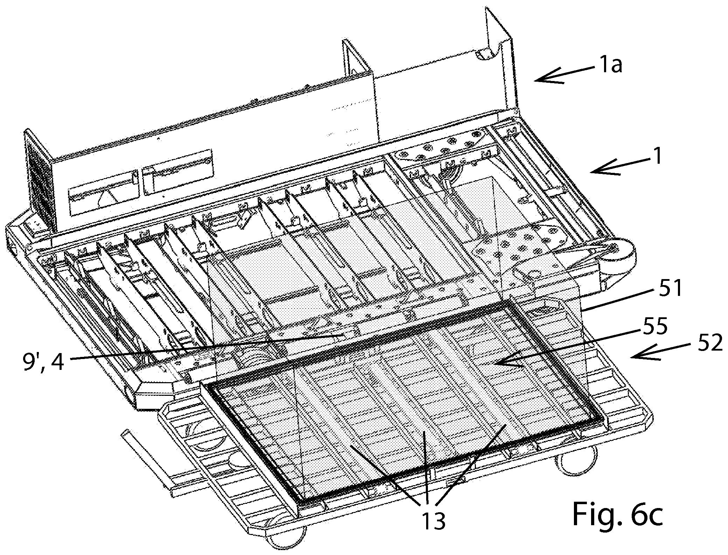

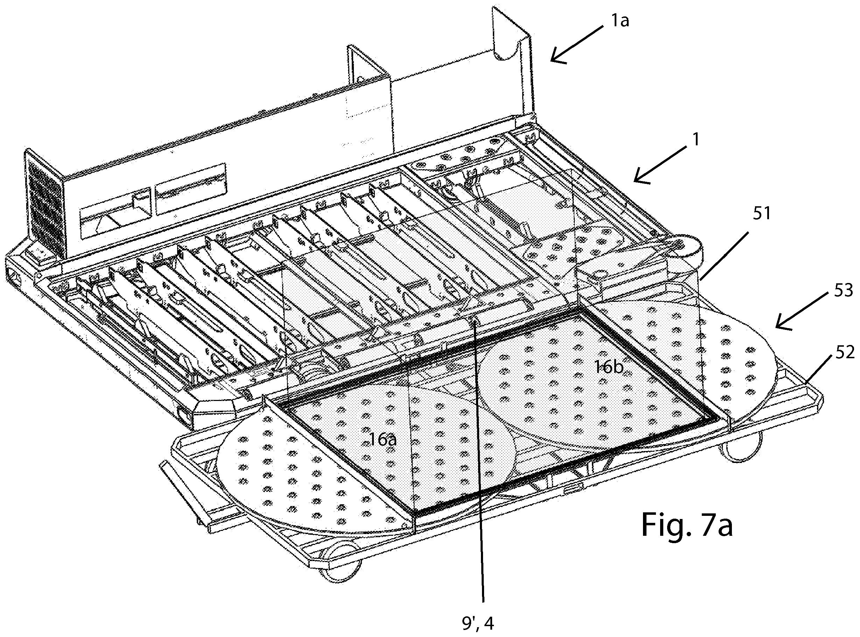

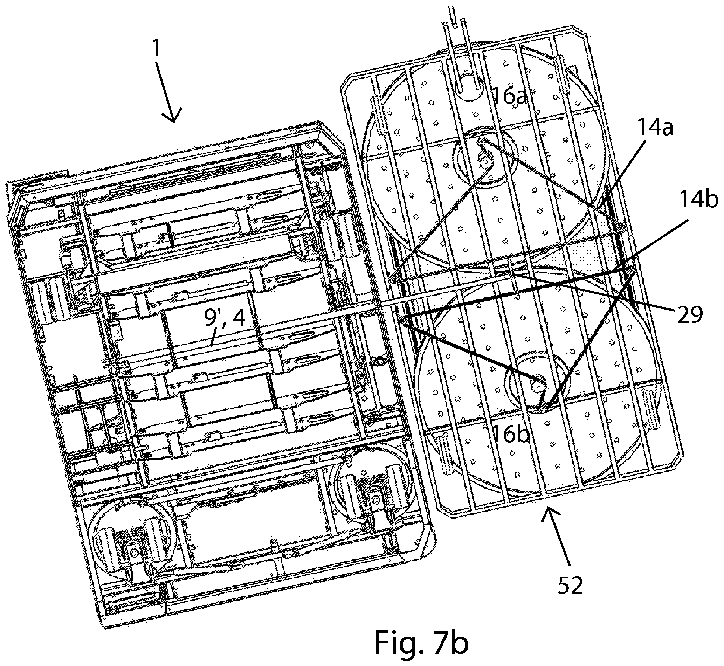

Während die Figuren 1 - 5 Lösungen zeigen, bei denen die Übernahmevorrichtung 4 direkt an dem zu übernehmenden Transportgut angreift, zeigen die Figuren 6 und 7 Lösungen, bei der die Übernahmevorrichtung 4 des Containertransporters 1 dies nur indirekt bewirkt, indem sie eine Übergabevorrichtung 55, die Bestandteil des Transportfahrzeuges 52 ist, aktiviert und antreibt.

Bei der Lösung gemäß Figur 6a und 6b besteht die Übergabevorrichtung 55 aus zwei nebeneinander liegenden, in einer vertikalen Ebene umlaufenden Ketten 14, deren oberes Trum sich knapp unterhalb des Niveaus der Ladefläche 53 des Transportfahrzeuges 52 befindet, wie die Ansicht von unten bei Figur 6a zeigt.

Die beiden Ketten 14 sind durch eine Verbindungsstange 29 funktionsvereinigt, die sich am unteren Trum befindet. Unter dem Ladeboden 3 des Containertransporters 1 läuft in der gewünschten Bewegungsrichtung wiederum ein Übernahme-Arm 9', der teleskopierbar ist, und sich im deaktivierten zurückgezogenen Zustand ganz innerhalb der Grundfläche des Containertransporters 1 befindet. Beim Ausfahren des Teleskops erstreckt er sich jedoch durch eine entsprechende Ausnehmung im Chassis unter das Transportfahrzeug 52 hinein und drückt mit seinem freien Ende und einer dort angeordneten Gabel quer gegen die Verbindungsstange 29 zwischen den beiden Ketten 14 und kann diese vom Containertransporter wegschieben bis zum äußeren Rand des Transportfahrzeuges 52.

Wie die Ansicht der Figur 6b von oben auf die Rückseite des zu bewegenden Transportgutes, etwa einer Palette 51, zeigt, ist an jeder Kette 14 ein Übernahme-Haken 7 befestigt, der einen nach oben ragenden Schenkel aufweist, der bei dieser Bewegung der Kette 14 die Hinterkante der Palette 51 greift und diese nach vorne, also Richtung Containertransporter 1, schiebt.

In dieser kontaktierenden Stellung wird der gegenüber der Kette 14 schwenkbare Übernahme-Haken 7 nur über einen Teil seines Bewegungsweges durch eine Kullisse 30 gehalten, auf der ein vom Haken abstrebender Zapfen 31 aufliegt.

Außerhalb dieses Bewegungsweges sinkt der Haken mit seinem Greifende soweit nach unten ab, dass er nicht über die Ladefläche 53 des Transportfahrzeuges 52 aufragt.

Hinsichtlich der Bewegung der Ketten 14 gibt es prinzipiell zwei Möglichkeiten: Entweder wird beim Einziehen des teleskopierbaren Übernahme-Armes 9' zurück unter den Containertransporter 1 die Verbindungsstange 29 unter dem Transportfahrzeug 52 mit zurückbewegt, oder sie verbleibt in der vordersten Stellung, in die sie geschoben wurde. Wenn letzteres der Fall ist, müssen im richtigen Abstand über den gesamten Umlauf der Ketten 14 verteilt mehrere Verbindungsstangen 29 vorhanden sein, so dass immer eine an der richtigen Position für das Ausfahren und Ergreifen der teleskopierbaren Übernahme-Armes 9' steht und somit die Ketten 14 nur in eine Richtung weiter bewegt werden.

Im Gegensatz dazu zeigt Figur 6c eine Lösung, bei der die Übergabevorrichtung 55 im Boden des Transportfahrzeuges 52 aus in einer vertikalen Ebene umlaufenden, nebeneinander beabstandeten Transportriemen 13 besteht, auf deren oberen Trum das Transportgut, etwa die Palette 51, entweder ständig aufliegt oder nur nach Hochdrücken der Übergabevorrichtung 55.

Sowohl das Antreiben der Riemen 13 in die gewünschte Bewegungsrichtung der Palette 51 als auch ggf. deren Hochdrücken wird wiederum durch die Übernahmevorrichtung 4 im Boden des Containertransporters 1, beispielsweise des teleskopierbaren, ausfahrbaren Übernahme-Armes 9', bewirkt, von der hier nur ein kurzes Stück zu sehen ist.

Auch die Figuren 7a zeigen eine Übergabevorrichtung 55 an dem Transportfahrzeug 52, welche aktiviert und angetrieben wird durch eine Übernahmevorrichtung 4 aus dem Containertransporter 1, beispielsweise der teleskopierbare, ausfahrbare Übernahmearm 9':
Dabei wird die Ladefläche 53 des Transportfahrzeuges 52 durch zwei nebeneinander horizontal liegende Drehscheiben 16a,b gebildet, die jeweils um einen Punkt, meist ihren Mittelpunkt, drehend antreibbar sind, und zwar immer in gegenläufigen Drehrichtungen zueinander, was durch je eine entsprechende auf der Unterseite umlaufende Kette 14a, b erreichbar ist, die mit einem Ritzel im Drehpunkt der Drehscheiben 16a,b kämmt.

Die Ketten 14a,b sind wiederum über eine Verbindungsstange 29 in ihrer Bewegung gekoppelt, die von dem bereits beschriebenen ausfahrbaren Übernahme-Arm 9', die die Übernahmevorrichtung 4 des Containertransporters 1 darstellt, verschoben wird.

Eine übergreifend auf beiden Drehscheiben 16a,b stehende z. B. Palette 51 wird durch eine Drehbewegung, die im benachbarten Bereich der Drehscheiben 16a,b zum Containertransporter 1 hin gerichtet ist, ein Bewegen der Palette 51 auf den Containertransporter 1 bewirken.

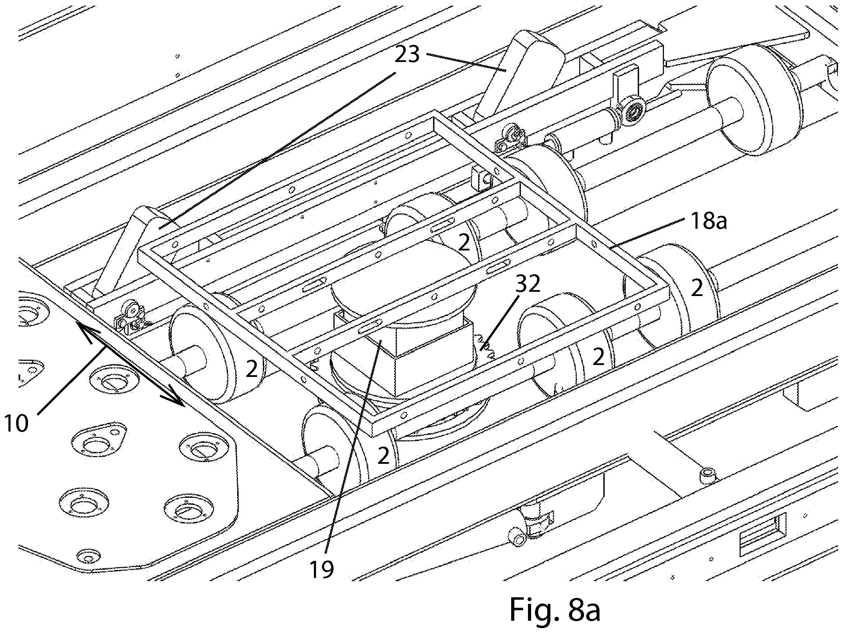

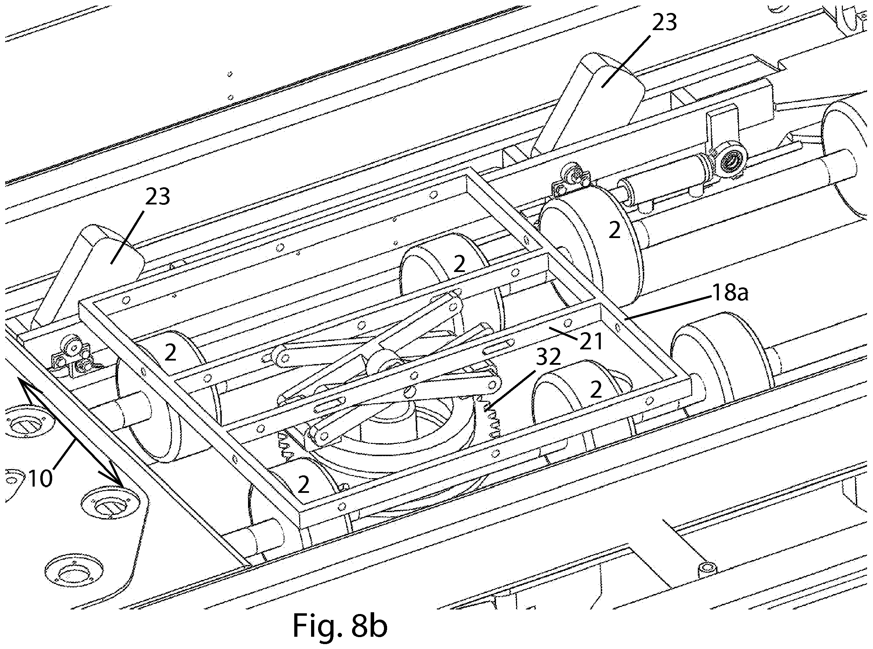

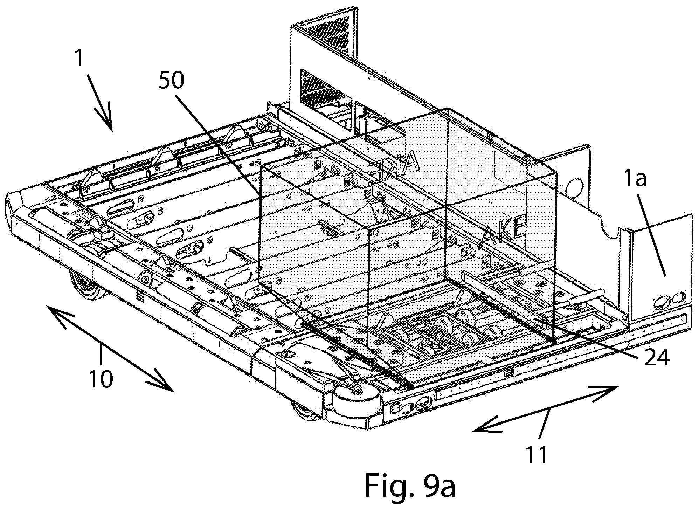

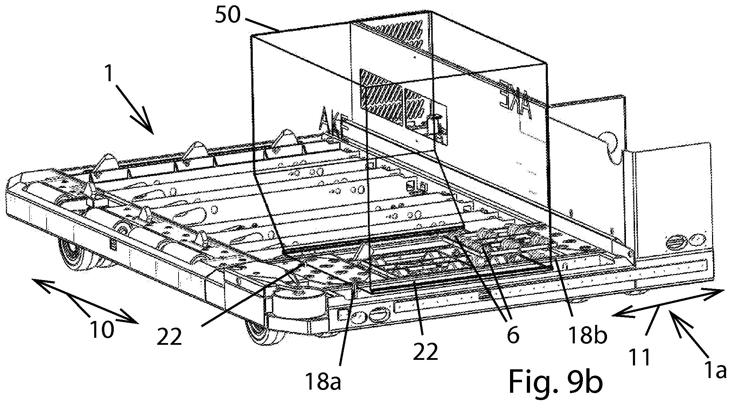

Im Gegensatz zu den vorbeschriebenen Figuren befassen sich die Figuren 8 und 9 mit dem Problem einer Drehung eines Ladegutes, das sich bereits auf dem Containertransporter 1 befindet, um seine Hochachse, wie beispielsweise in Figur 8c ersichtlich.

Daraus wird auch klar, dass die Container 50 wegen des Überhanges an einer Querkante keine symmetrischen Quader sind, und deshalb erst recht im Flugzeug einer Ausrichtung nach diesem Überhang benötigen.

Die Container 50 werden auf und vom Containertransporter 1 in aller Regel nur in Längsrichtung 10 übergeben und stehen dabei mit ihrer Längserstreckung in Querrichtung 11 des Containertransporters 1.

In das Flugzeug eingebracht werden müssen sie jedoch in ihrer Längsrichtung und benötigen daher auf dem Containertransporter 1 eine Drehung um 90°, was mit der in diesen Figuren dargestellten Drehvorrichtung 17 bewerkstelligt wird:
Wie am besten in Figur 8c zu erkennen, umfasst die Drehvorrichtung 17 einen ersten Hubrahmen 18a, der in der Höhe verstellbar und um seine Hochachse 20 drehbar ist.

Im abgesenkten Zustand befindet er sich unterhalb des Niveaus der Ladefläche 3 des Containertransporters 1. In dieser deaktivierten Stellung kann ein Container 50 auf der Ladefläche 3 genau über dem Hubrahmen 18a positioniert werden.

Anschließend wird der Hubrahmen 18a über das Niveau der Ladefläche 3 angehoben, und hebt damit den Container 50 mit an, dreht sich mit dem Container um seine Hochachse und senkt sich in der gewünschten Drehstellung des Containers 50 wieder ab auf ein Niveau unterhalb der Ladefläche 3, auf der nun der Container 50 wieder aufliegt, allerdings um z. B. 90° gedreht.

Das Anheben des Hubrahmens 18a kann gemäß Figur 8a durch einen Hydraulikzylinder 19 geschehen, allerdings mit einer unrunden, vorzugsweise poligonen Längsführung, um unerwünschte Drehbewegungen um die Längsachse des Hydraulikzylinders zu vermeiden, während bei der Lösung der Figur 8b zum Hochheben ein Scherengestänge 21 zwischen dem Hubrahmen 18a und einem Drehkranz 32 verwendet wird. Mittels des Drehkranzes 32, in den ein nicht dargestelltes Ritzel eingreifen kann, wird das Scherengestänge 21 oder der Hydraulikzylinder 19 und damit der gesamte Hubrahmen 18a um den gewünschten Winkel um die Hochachse 20 gedreht.

Wie die Figuren 8a und 8b auch zeigen, sind die Durchbrüche zwischen den Streben des Hubrahmens 18a so groß und so positioniert, dass im abgesenkten Zustand die Transportrollen 2 der Ladefläche 3 des Containertransporters 1 durch den Hubrahmen 18a nach oben ragen.

Um den Container 50 genau über dem Hubrahmen 18a zu positionieren, werden aus der Ladefläche beim Herüberziehen des Containers 50 die in Längsrichtung wirkenden Längsanschläge 23 hochgestellt und der Container 50 bis auf Anschlag an diese bewegt.

Um auch eine korrekte Positionierung in Querrichtung 11 zu erreichen, muss der Container 50 ferner in Querrichtung 11 bewegt werden bis zum Anschlag an in Querrichtung 11 wirkenden Queranschlägen 22, die beispielsweise in Figur 9b erkennbar sind.

Bei der Lösung gemäß Figur 9a erfolgt dies mit Hilfe eines Schiebers 24, der aus der Seitenwand 1a des Containertransporters 1 ausfährt mittels zweier nebeneinander liegender Arbeitszylinder und den Container 50 bis zu diesen Anschlägen 22 verschiebt.

Bei der Lösung gemäß Figur 9b ist zum gleichen Zweck neben dem ersten Hubrahmen 18a ein zweiter Hubrahmen 18b, allerdings näher an der Seitenwand 1a, angeordnet, der jedoch nicht um seine Hochachse drehbar ist. Stattdessen trägt dieser zweite Hubrahmen 18b über seine Oberseite vorstehende Transportrollen 2', die auch antreibbar sind.

Der auf nur dem zweiten Hubrahmen 18b oder auf beiden Hubrahmen 18a,b aufliegende Container 50 kann durch Anheben des zweiten Hubrahmens 18b und kontaktieren dessen Transportrollen 2' - die so angeordnet sind, dass sie nur in Querrichtung 11 transportieren können - die Unterseite des Containers 50 hochheben und diesen in Querrichtung 11 verlagern bis an die Queranschläge 22 heran. Anschließend wird dieser zweite Hubrahmen 18b abgesenkt und der erste Hubrahmen 18a tritt in Aktion wie zuvor beschrieben.

### BEZUGSZEICHENLISTE

- 1: Container-Transporter
- 1a: Seitenwand
- 2, 2': Transportrolle
- 3: Ladefläche
- 4: Übernahmevorrichtung
- 5: Übernahmeantrieb
- 6: Übernahme-Rolle
- 7: Übernahme-Haken
- 8: Übernahme-Reibklotz
- 9, 9': Übernahme-Arm
- 10: Längsrichtung
- 11: Querrichtung
- 12: Hebelgestänge
- 13: Riemen
- 14: Kette
- 15: Haken
- 16a,b: Drehscheibe
- 17: Drehvorrichtung
- 18a,b: Hubrahmen
- 19: Hydraulikzylinder
- 20: Hochachse
- 21: Scherengestänge
- 22: Queranschläge
- 23: Längsanschläge
- 24: Schieber
- 25: Kontaktelemente
- 26: Öffnung
- 27: Chassis-Rahmen
- 28: Hebelgestänge
- 29: Verbindungsstange
- 30: Kullisse
- 31: Zapfen
- 32: Drehkranz

- 50: Container
- 51: Palette
- 52: Transportfahrzeug
- 53: Ladefläche
- 54: Durchbrüche
- 55: Übergabevorrichtung

## Patentansprüche

1. **Container-Transporter** (1) mit
a) einer in Längsrichtung (10) des Containertransporters (1) verlaufenden Seitenwand (1a),
b) angetriebenen, nur in Längsrichtung (10) transportieren, Transportrollen (2), die aus der Ladefläche (3) des Containertransporters (1) nach oben vorstehen,
**dadurch gekennzeichnet, dass**
c) quer transportierende, anhebbare Riemen innerhalb der Ladefläche des Containertransporters vorhanden sind,
d) der Containertransporter (1) eine bewegliche Übernahmevorrichtung (4) mit einem Übernahmeantrieb (5) aufweist, die bei einem außerhalb der Ladefläche (3) des Containertransporters (1) stehenden Ladegut - also einem Container (50) oder einer Palette (51) - das Herüberschieben auf den Containertransporter (1) bewirkt,
e) die Übernahme-Vorrichtung (4)
- einen teleskopierbaren Übernahme-Arm (9') oder
- einen mittels Hebelgestänge (12, 28) ausfahrbaren und/oder verschwenkbaren Übernahme-Arm (9) umfasst.

2. Container-Transporter (1) nach Anspruch 1,
**dadurch gekennzeichnet, dass**
- die Übernahme-Vorrichtung (4) mindestens eine angetriebene Übernahmerolle (6) oder einen beweglichen Übernahme-Haken (7) oder einen beweglichen Übernahme-Reibklotz (8) aufweist,
- insbesondere der den Übernahme-Haken (7) tragende Übernahme-Arm (9, 9') unter dem Ladegut oder seitlich des Ladegutes ausgefahren werden kann und in Richtung Containertransporter (1) herangezogen werden kann.

3. Container-Transporter (1) nach einem der vorhergehenden Ansprüche,
**dadurch gekennzeichnet, dass**
die Übernahme-Vorrichtung (4) des Containertransporters (1) eine Übergabe-Vorrichtung (55) des Transportfahrzeuges (52) kontaktiert und antreibt.

4. Container-Transporter (1) nach Anspruch 3,
**dadurch gekennzeichnet, dass**
die Übergabe-Vorrichtung (55) ein oder mehrere in Transportrichtung bewegbare Riemen (13) oder Ketten (14) sind, die den z. B. Container (50) kraftschlüssig durch Aufliegen auf seiner Oberseite oder formschlüssig durch einen hinter die entfernte Kante des Containers (50) greifenden Haken (15), der an dem Riemen oder der Kette befestigt ist, auf den Containertransporter (1) schieben.

5. Container-Transporter (1) nach Anspruch 4,
**dadurch gekennzeichnet, dass**
die Übergabe-Vorrichtung (55) zwei benachbarte Drehscheiben (16a, b) auf der Ladefläche des Transportfahrzeuges (52) umfasst, auf denen das Transportgut jeweils teilweise aufliegt, und die durch Antrieb mittels des Übernahme-Antriebes (5) in gegenläufige Richtungen das Transportgut auf den Containertransporter (1) verlagern.

6. Container-Transporter (1) nach einem der vorhergehenden Ansprüche,
**dadurch gekennzeichnet, dass**
der Containertransporter (1) eine Drehvorrichtung (17) aufweist zum Drehen eines Containers (50) auf der Ladefläche (3) des Containertransporters (1).

7. Container-Transporter (1) nach Anspruch 6,
**dadurch gekennzeichnet, dass**
- die Drehvorrichtung (17) einen in die Ladefläche (3) des Containertransporters (1) unter das Auflageniveau der Transportrollen (2) absenkbaren und im angehobenen Zustand um eine Hochachse (20) drehbaren ersten Hubrahmen (18a) aufweist und
- insbesondere der erste Hubrahmen (18a) über einen Hydraulikzylinder (19) oder ein Scherengestänge (21) gegenüber dem Chassis des Containertransporters (1) anhebbar ist.

8. Container-Transporter (1) nach einem der vorhergehenden Ansprüche,
**dadurch gekennzeichnet, dass**
- der Containertransporter (1) in Längsrichtung (10) und in Querrichtung (11) wirkende Anschläge (22,23) zum Positionieren des Containers auf dem Hubrahmen (18a) aufweist und
- insbesondere der Containertransporter (1) eine QuerPositioniervorrichtung zum Verschieben des Containers an die in Querrichtung (11) wirkenden Queranschläge (22) aufweist.

9. Container-Transporter (1) nach Anspruch 8,
**dadurch gekennzeichnet, dass**
die Querpositioniervorrichtung ein aus der Seitenwand (1a) des Containertransporters (1) ausfahrbarer Schieber (24) ist oder die Querpositioniervorrichtung ein aus der Ladefläche (3) des Containertransporters (1) nach oben ausfahrbarer zweiter Hubrahmen (18 b) ist, in dem in Querrichtung (11) antreibbare Transportrollen (2') angeordnet sind zum Anheben und Verschieben des Containers gegen die Queranschläge (22).

10. Container-Transporter (1) nach Anspruch 8 oder 9,
**dadurch gekennzeichnet, dass**
- der erste und/oder zweite Hubrahmen (18a,b) so gestaltet sind, dass in der abgesenkten Stellung die Transportrollen (2) des Containertransporters (1) aus Durchbrüchen der Hubrahmen (18a,b) nach oben vorstehen,
- die Anschläge (22, 23) in Längs- (10) und Querrichtung (11), insbesondere die Queranschläge (22), gesteuert unter die Ladefläche (3) des Containertransporters (1) absenkbar sind.

11. Container-Transporter (1) nach einem der vorhergehenden Ansprüche,
**dadurch gekennzeichnet, dass**
in den nicht von der Seitenwand (1a) abgedeckten Seitenflächen des Containertransporters (1) formschlüssig wirkende Kontaktelemente (25), insbesondere selbstzentrierende Kontaktelemente, zum formschlüssigen Zusammenwirken mit einem zu kontaktierenden Transportfahrzeug (52) vorhanden sind.

12. **Verfahren** zum automatischen Herüberbewegen eines Ladegutes (50, 51) von einem benachbarten Transportfahrzeug (52) auf einen Container-transporter (1) gemäß einem der Ansprüche 1 bis 11, **dadurch gekennzeichnet, dass**
- eine Übernahmevorrichtung (4) seitlich aus dem Containertransporter (1) ausgefahren wird,
- dadurch das Ladegut (50, 51) oder eine im Transportfahrzeug (52) angeordnete Übergabevorrichtung (55) in Bewegung versetzt wird, so dass dadurch das Ladegut (50, 51) auf den Containertransporter (1) verschoben wird.

13. Verfahren nach Anspruch 12,
**dadurch gekennzeichnet, dass**
die Übernahmevorrichtung (4) oberhalb der Ladefläche (53) des Transportfahrzeuges (52) am Container (50) vorbei ausgefahren wird oder unter dem Boden des Ladegutes im Chassis des Transportfahrzeuges (52) ausgefahren wird und dabei insbesondere durch Durchbrüche (54) in der Ladefläche (3) des Transportfahrzeuges (52) hindurch den Boden des Ladegutes kontaktiert.

14. Verfahren nach einem der vorhergehenden Verfahrensansprüche, wobei zusätzlich ein Drehen des auf der Ladefläche eines Containertransporters (1) befindlichen Containers (50) erfolgt, wenn die Ladefläche (3) nur in Längsrichtung (10) transportierende Transportrollen (2, 2') aufweist,
**dadurch gekennzeichnet, dass**
- der Container (50) in Längs- (10) und Querrichtung (11) auf der Ladefläche (3) des Containertransporters (1) mittig oberhalb eines Hubrahmens (18a) positioniert wird
- der in der Ladefläche (3) des Containertransporters (1) versenkbare Hubrahmen (18a) aus der Ladefläche (3) nach oben ausgefahren, mit dem Container (50) gedreht und in der gewünschten Drehlage wieder abgesenkt wird.

## Claims

1. A container transporter (1), comprising:
a) a side wall (1a) extending in a longitudinal direction (10) of the container transporter (1),
b) driven transport rollers (2) that only transport in the longitudinal direction (10) and protrude from a loading surface (3) of the container transporter (1) in an upward direction,
**characterized in that**
c) transversally transporting liftable belts are provided within the loading surface of the container transporter,
d) the container transporter (1) includes a movable transfer device (4) with a transfer drive (5) which pushes a cargo piece that sits outside of the loading surface (3) of the container transporter (1), thus a container (50) or a pallet (51), onto the container transporter (1),
e) the transfer device (4) includes
- a telescoping transfer arm (9'), or
- a transfer arm (9) that is extensible by a lever rod linkage (12, 28) and/or pivotable.

2. The container transporter (1) according to claim 1,
**characterized in that**
- the transfer device (4) includes at least one driven transfer roller (6) or a movable transfer hook (7) or a movable transfer friction block (8),
- in particular the transfer arm (9, 9') supporting the transfer hook (7) is extendable below the cargo piece or laterally from the cargo piece and pullable in a direction towards the container transporter (1).

3. The container transporter (1) according to one to the preceding claims,
**characterized in that**
the transfer device (4) of the container transporter (1) contacts and drives a transfer device (55) of the transport vehicle (52).

4. The container transporter (1) according to claim 3,
**characterized in that**
the transfer device (55) includes one or plural belts (13) or chains (14) that are movable in the transport direction and which push e.g. the container (50) onto the container transporter (1) in a friction locking manner by resting on its top side or in a form locking manner by a hook (15) that reaches behind a rear remote edge of the container (50) and which is attached at the belt or the chain.

5. The container transporter (1) according to claim 4,
**characterized in that**
the transfer device (55) includes two adjacent turning discs (16a, b) on the loading surface of the transport vehicle (52) wherein the transport cargo respectively rests partially on the rotating discs which move the transport cargo onto the container transporter (1) **in that** they are driven by the transfer drive (5) in opposite directions.

6. The container transporter (1) according to one of the preceding claims,
**characterized in that**
the container transporter (1) includes a rotating device (17) for rotating a container (50) on the loading surface (3) of the container transporter (1).

7. The container transporter (1) according to claim 6,
**characterized in that**
- the rotation device (17) includes a first lifting frame (18a) that is lowerable into the loading surface (3) of the container transporter (1) below a contact level of the transport rollers (2) and rotatable about a vertical axis (20) in a raised condition, and
- in particular the first lifting frame (18a) is liftable by a hydraulic cylinder (19) or a scissor rod linkage (21) relative to a chassis of the container transporter (1).

8. The container transporter (1) according to one of the preceding claims,
**characterized in that**,
- the container transporter (1) includes stops (22, 23) that act in the longitudinal direction (10) and in the transversal direction (11) for positioning the container on the lifting frame (18a), and
- in particular the container transporter (1) includes a transversal positioning device for moving the container in contact with the transversal stops (22) acting in the transversal direction (11).

9. The container transporter (1) according to claim 8,
**characterized in that**
the transversal positioning device is a slide (24) that is movable out of the side wall (1a) of the container transporter (1) or the transversal positioning device is a second lifting frame (18b) that is extendable in upward direction out of the loading surface (3) of the container transporter (1) wherein transport rollers (2') that are drivable in the transversal direction (11) are arranged in the lifting frame for lifting and moving the container against the transversal stops (22).

10. The container transporter (1) according to claim 8 or 9,
**characterized in that**
- the first and/or the second lifting frame (18a, b) are configured so that the transport rollers (2) of the container transporter (1) protrude in upward direction from cut outs of the lifting frames (18a, b) in the lowered position,
- the stops (22, 23) in the longitudinal direction (10) and transversal direction (11) in particular the transversal stops (22) are lower able in a controlled manner below the loading surface (3) of the container transporter (1).

11. The container transporter (1) according to one of the preceding claims,
**characterized in that**
form locking contact elements (25) are provided in side surfaces of the container transporter (1) that are not covered by the side wall (1a), in particular self-centering contact elements for form locking cooperation with a transport vehicle (52) that is to be contacted.

12. A method for automatically moving a cargo piece (50, 51) from an adjacent transport vehicle (52) onto a container transporter (1) according to one of the claims (1-11),
**characterized in that**
- a transfer device (4) is laterally extended from the container transporter (1),
- so that the cargo piece (50, 51) or a transfer device (55) arranged in the transport vehicle (52) is set in motion so that the cargo piece (50, 51) is moved onto the container transporter (1).

13. The method according to claim 12,
**characterized in that**
the transfer device (4) is extended above the cargo surface of the transport vehicle (52) past the container (50) or extended below a base of the cargo piece in the chassis of the transport vehicle (52) and thus in particular contacts the base of the cargo piece through cut outs (54) in the loading surface (3) of the transport vehicle.

14. The method according to one of the preceding method claims,
wherein the container (50) that is arranged on the loading surface of the container transporter (1) is additionally rotated when the loading surface (3) includes transport rollers (2, 2') that only transport in the longitudinal direction (10),
**characterized in that**
- the container (50) is positioned in the longitudinal direction (10) and the transversal direction (11) on the loading surface (3) of the container transporter (1) centrally above a lifting frame (18a),
- the lifting frame (18a) that is lowerable into the loading surface (3) of the container transporter (1) is extended upward from the loading surface (3), rotated with the container (50) and lowered again in the desired rotational orientation.

## Revendications

1. **Transporteur de conteneur (1)** avec
a) une paroi latérale (1a) s'étendant dans le sens longitudinal du transporteur de conteneur (1),
b) entraîné par des rouleaux de transport (2) transportant seulement dans le sens longitudinal (10), en sailli vers le haut de la surface de chargement (3) du transporteur de conteneur (1),
**caractérisé en ce que**
c) des courroies transportant transversalement et pouvant être levées sont prévues dans la surface de chargement du transporteur de conteneur,
d) le transporteur de conteneur (1) comprend un dispositif de transfert (4) mobile avec un entraînement de transfert (5) qui, lors d'un chargement situé hors de la surface de chargement (3) du transporteur de conteneur (1) - i.e. un conteneur (50) ou une palette (51) - entraîne le déplacement vers le transporteur de conteneur (1),
e) le dispositif de transfert (4) comprend
- un bras de transfert (9') télescopique ou
- un bras de transfert (9) extensible et/ou pivotable au moyen d'une tringlerie de relevage (12, 28).

2. Transporteur de conteneur (1) selon la revendication 1,
**caractérisé en ce que**
- le dispositif de transfert (4) comprend au moins un rouleau de transfert (6) entraîné ou un crochet de transfert (7) mobile ou un bloc de frottement (8) mobile,
- en particulier le bras de transfert (9, 9') supportant le crochet de transfert (7) peut être déployé sous le chargement ou du côté du chargement et peut être tiré vers le transporteur de conteneur (1).

3. Transporteur de conteneur (1) selon une des revendications précédentes,
**caractérisé en ce que**
le dispositif de transfert (4) du transporteur de conteneur (1) est en contact avec et entraîne un dispositif de transfert (55) du véhicule de transport (52).

4. Transporteur de conteneur (1) selon la revendication 3,
**caractérisé en ce que**
le dispositif de transfert (55) est constitué par une ou plusieurs courroies (13) ou chaînes (14) mobiles dans le sens de transport qui déplacent par exemple le conteneur (50) sur le transporteur de conteneur (1) par force en étant en appuie sur sa surface ou par forme par un crochet (15) engageant derrière le bord éloigné du conteneur (50), qui est attaché à la courroie ou la chaine.

5. Transporteur de conteneur (1) selon la revendication 4,
**caractérisé en ce que**
le dispositif de transfert (55) comprend deux plaques tournantes (16a, b) avoisinantes sur la surface de chargement du véhicule de transport (52) sur lesquelles le chargement est en partie posée et qui déplacent le chargement sur le transporteur de conteneur (1) dans des sens opposés par l'entraînement de transfert (5).

6. Transporteur de conteneur (1) selon une des revendications précédentes,
**caractérisé en ce que**
le transporteur de conteneur (1) comprend un dispositif tournant (17) pour tourner un conteneur (50) sur la surface de chargement (3) du transporteur de conteneur (1).

7. Transporteur de conteneur (1) selon la revendication 6,
**caractérisé en ce que**
- le dispositif tournant (17) comprend un premier cadre élévateur (18a) qui peut être descendue dans la surface de chargement (3) du transporteur de conteneur (1) sous le niveau d'appui des rouleaux de transport (2) et qui peut être tourné autour d'un axe vertical (20) dans l'état soulevé, et
- le premier cadre élévateur (18a) en particulier peut être soulevé par un cylindre hydraulique (19) ou une tringlerie en parallélogramme (21) par rapport au châssis du transporteur de conteneur (1).

8. Transporteur de conteneur (1) selon une des revendications précédentes,
**caractérisé en ce que**
- le transporteur de conteneur (1) comprend des arrêts (22,23) agissant dans le sens longitudinal (10) et dans le sens transversal (11) pour positionner le conteneur sur le cadre élévateur (18a), et
- le transporteur de conteneur (1) en particulier comprend un dispositif de positionnement transversal pour déplacer le conteneur vers les arrêts transversaux (22) agissant dans le sens transversal (11).

9. Transporteur de conteneur (1) selon la revendication 8,
**caractérisé en ce que**
le dispositif de positionnement transversal est une glissière (24) qui peut être déployée de la paroi latérale (1a) du transporteur de conteneur (1), ou **en ce que** le dispositif de positionnement transversal est un deuxième cadre élévateur (18 b) qui peut être déployée de la surface de chargement (3) du transporteur de conteneur (1) vers le haut, dans lequel des rouleaux de transport (2') qui peuvent être entraînés dans le sens transversal sont arrangés pour soulever et déplacer le conteneur contre les arrêts transversaux (22).

10. Transporteur de conteneur (1) selon les revendications 8 ou 9,
**caractérisé en ce que**
- le premier et/ou le deuxième cadre élévateur (18a,b) sont adaptés de sorte que dans la position abaissée les rouleaux de transport (2) du transporteur de conteneur (1) sont en saillie vers le haut dans des passages des cadres élévateurs (18a,b),
- les arrêts (22, 23) dans le sens longitudinal (10) et dans le sens transversal (11), en particulier les arrêts transversaux (22) peuvent être abaissés en dessous de la surface de chargement (3) du transporteur de conteneur (1) de manière contrôlée.

11. Transporteur de conteneur (1) selon une des revendications précédentes,
**caractérisé en ce que**
les surfaces latérales du transporteur de conteneur (1) qui ne sont pas couvertes par la paroi latérale (1a) comprennent des membres de contact (25) agissant par serrage de forme, en particulier des membres de contact autocentrés pour une coopération par serrage de forme avec un véhicule de transport (52) à contacter.

12. **Procédé** pour un transfert automatique d'un chargement (50, 51) d'un véhicule de transport avoisiné (52) à un transporteur de conteneur (1) selon une des revendications 1 à 11,
**caractérisé en ce que**
- un dispositif de transfert (4) est déployé latéralement du transporteur de conteneur (1),
- de cette manière le chargement (50, 51) ou un dispositif de transfert (55) arrangé dans le véhicule de transport (52) est mis en mouvement de sorte que le chargement (50, 51) est transférée sur le transporteur de conteneur (1).

13. Procédé selon la revendication 12,
**caractérisé en ce que**
le dispositif de transfert (4) est sorti en dessus de la surface de chargement (53) du véhicule de transport (52) devant le conteneur (50) ou est sorti en dessous du fond du chargement dans le châssis du véhicule de transport (52) tout en contactant en particulier à travers de passages (54) dans la surface de chargement (3) du véhicule de transport (52) le fond du chargement.

14. Procédé selon une des revendications précédentes, où en outre un pivotement du conteneur (50) sur la surface de chargement d'un transporteur de conteneur (1) est réalisé quand la surface de chargement (3) ne comprend que des rouleaux de transport (2, 2') transportant dans le sens longitudinal,
**caractérisé en ce que**
- le conteneur (50) est positionné dans le sens longitudinal (10) et dans le sens transversal (11) sur la surface de chargement (3) du transporteur de conteneur (1) au centre au-dessus d'un cadre élévateur (18a)
- le cadre élévateur (18a) qui peut être descendue dans la surface de chargement (3) du transporteur de conteneur (1) est déployée de la surface de chargement (3) vers le haut, est pivoté avec le conteneur (50) et est alors abaissé dans la position de pivotement désirée.
